# EUROPEAN PATENT SPECIFICATION

(11) **EP 3 094 689 B1**
(45) Date of publication and mention of the grant of the patent: **05.06.2019**
(21) Application number: 15701891.2
(22) Date of filing: 13.01.2015
(51) Int. Cl.: C09D 4/00, C08K 9/06, C08K 13/06

(54) **HARDCOATS COMPRISING ALKOXYLATED MULTI(METH)ACRYLATE MONOMERS AND SURFACE TREATED NANOPARTICLES**
HARTBESCHICHTUNGEN MIT ALKOXYLIERTEN MULTI(METH)ACRYLAT-MONOMEREN UND OBERFLÄCHENBEHANDELTEN NANOPARTIKELN
REVÊTEMENTS DURS COMPRENANT DES MONOMÈRES MULTI(MÉTH)ACRYLATE ALCOXYLÉS ET NANOPARTICULES TRAITÉES EN SURFACE

(30) Priority: 15.01.2014 US 201461927641 P
(43) Date of publication of application: 23.11.2016
(73) Proprietor: 3M Innovative Properties Company, St. Paul, MN 55133-3427 (US)
(72) Inventor: POKORNY, Richard J., Saint Paul, Minnesota 55133-3427 (US); KAMRATH, Robert F., Saint Paul, Minnesota 55133-3427 (US); TOY, Michelle L., Saint Paul, Minnesota 55133-3427 (US); SOLOMONSON, Steven D., Saint Paul, Minnesota 55133-3427 (US); CROSS, Elisa M., Saint Paul, Minnesota 55133-3427 (US); RENSTROM, Anthony M., Saint Paul, Minnesota 55133-3427 (US); BARTON, Roger W., Saint Paul, Minnesota 55133-3427 (US); SYKORA, Craig R., Saint Paul, Minnesota 55133-3427 (US)
(74) Representative: Herzog, Fiesser & Partner Patentanwälte PartG mbB
(86) International application number: PCT/US2015/011094
(87) International publication number: WO 2015/108834

(56) References cited:
- WO-A1-02/22751
- US-A1- 2006 148 996
- US-A1- 2010 003 501

## Description

### Summary

Presently described is a hardcoat composition comprising at least one first (meth)acrylate monomer comprising at least three (meth)acrylate groups and C₂-C₄ alkoxy repeat units wherein the monomer has a molecular weight per (meth)acrylate group ranging from 220 to 375 g/mole; at least one second (meth)acrylate monomer comprising at least three (meth)acrylate groups; and at least 30 wt-% solids of inorganic oxide nanoparticles wherein the inorganic oxide nanoparticles comprise silica, a copolymerizable surface treatment and a non-copolymerizable silane surface treatment.

The non-copolymerizable silane surface treatment lacks a free-radically polymerizable group.

In some embodiments, the non-copolymerizable silane surface treatment has the general formula

X-L-SiRₘ(OR¹)₃₋ₘ

wherein X is an organic group comprising 3 to 12 carbon atoms;
L is an organic divalent linking group or a covalent bond;
R is independently C₁-C₄ alkyl;
R¹ is independently H or C₁-C₄ alkyl; and
m ranges from 0 to 2.

In other embodiments, the non-copolymerizable silane surface treatment has a surface tension ranging from 22 to 29 dynes/cm.

WO 02/22751 A1 discloses hard and scratch resistant coating compositions for LCD displays, comprising polymethacrylate compound, and metal oxide bound to an organic compound having a radiation-curable group and an adhesion promoter.

### Brief Description of the Drawings

Fig. 1 is a cross-sectional schematic of a touch screen;
Fig. 2 is a cross-sectional schematic of a touch sensor substrate; and
Fig. 3 is a cross-sectional schematic of a touch screen bonded to an illuminated display.

### Detailed Description

The present invention pertains to hardcoat compositions, as defined in the claims, comprising a polymerizable resin composition and inorganic oxide nanoparticles, as well as articles such as protective films and (e.g. illuminated) displays comprising such cured hardcoat. In favored embodiments, the hardcoat approaches the properties of glass, having high transparency, low haze, and high durability.

The polymerizable resin composition comprises at least one first (meth)acrylate monomer comprising at least three (meth)acrylate groups and alkoxy (i.e. alkylene oxide) repeat units. The alkoxy (i.e. alkylene oxide) repeat units typically have the formula -[O-L]- wherein L is a linear or branched alkylene. In some embodiments, the alkylene is a linear or branched C₂-C₆ alkylene. Such monomers may be represented by the general formula: 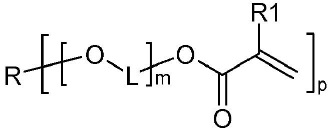 wherein R¹ is H or methyl, R is a trivalent organic residue; for each m, L is independently a straight-chain or branched C₂ to C₆ alkylene; and for each p, m is independently at least 1, 2 or 3 and no greater than 30 or 25. In some embodiments, m is no greater than 20, or 15, or 10.

In some embodiments, the first (meth)acrylate monomer comprises linear alkoxy repeat units such as ethylene oxide repeat units. Such monomers may be represented by the general formula:

R((OCₙH₂ₙ)ₘOC(O)C(R⁶)=CH₂)ₚ

wherein R is an organic residue having a valency of p, n is the number of carbon atoms of the alkoxy repeat unit, m is the number of alkoxy repeat units, R⁶ is hydrogen or methyl, and p is at least 3. For each m, n can independently range from 1 to 4. In some embodiments, the number of alkoxy repeat units, m, is greater than 6 and typically less than 20. In some embodiments, p is at least 4, or 5, or 6. In some embodiments, R is a hydrocarbon residue, optionally further comprising one or more oxygen, sulfur or nitrogen atoms. In some embodiments, R comprises at least 3, 4, 5, or 6 carbon atoms and typically no greater than 12 carbon atoms.

In other embodiments, the first (meth)acrylate monomer comprises branched alkoxy repeat units such as isopropylene oxide and/or isobutylene oxide repeat units. Some embodied monomers may be represented by the general formula:

R((OCₙ(CH₃)_{q}H_{2-q})ₘOC(O)-C(R⁶)=CH₂)ₚ

wherein R and p are the same a previously described. In the case of branched isopropylene oxide repeat units, n is 2 and q is 1. In the case of branched isobutylene oxide repeat units, n is 2 and q is 2.

The first (meth)acrylate monomer comprising at least three (meth)acrylate groups and C₂-C₄ alkoxy repeat units may comprises any combination of linear and/or branched C₂-C₄ alkoxy repeat units. Thus, the first (meth)acrylate monomer may comprise solely ethylene oxide repeat units, solely propylene oxide repeat units, solely butylene oxide repeat units, as well as combinations thereof. In one embodiment, the first (meth)acrylate monomer comprises a combination of both ethylene oxide and propylene oxide repeat units.

In favored embodiments, the molecular weight of the first (meth)acrylate monomer divided by the number of (meth)acrylate groups ranges from about 220 to 375 g/mole. Or in other words, the molecular weight per (meth)acrylate group ranges from about 220 to 375 g/mole per (meth)acrylate. As is demonstrated in the forthcoming examples, inclusion of such first (meth)acrylate monomer is amenable to providing a glass-like hardcoat. In some embodiments, the cured hardcoat (at a thickness of at least 10 microns) exhibits no cracking when tested with a #7H pencil and a 750 gram load. Alternatively or in addition thereof, the cured hardcoat is sufficiently durable such that it exhibits a haze of less than 5, or 4, or 3, or 2% after abrasion testing (according to the test method described in the examples).

Commercially available ethoxylated trimethylolpropane triacrylate monomers that meet such criteria include for example SR9035 and SR502, available from Sartomer, as further described in the forthcoming examples. Other monomers that meet such criteria can be synthesized, such as by reaction of polyalkylene oxide polyols with acrylic acid, as also described in the forthcoming example.

The concentration of the first(meth)acrylate monomer in the cured hardcoat composition is typically at least 5 wt-% and in some embodiments is at least 10 wt-% solids and generally no greater than 40 wt-%, or 35 wt-%, or 30 wt-%, or 25 wt-% solids. In some embodiments, the concentration of the first monomer is at least 11, 12, 13, 14, or 15 wt-% solids. In some embodiments, the concentration of the first monomer ranges from 5 to 10 wt-% solids. As used herein wt-% solids refers to the total amount of the dried and/or cured hardcoat composition after volatilization of any solvent that may be present.

The polymerizable resin of the hardcoat composition comprises at least one second multi-(meth)acrylate monomer. The second (meth)acrylate monomer is a different monomer than the first monomer.

Useful multi- (meth)acrylate monomers and oligomers include:
(a) di(meth)acryl containing monomers such as 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated bisphenol A diacrylate, hydroxypivalaldehyde modified trimethylolpropane diacrylate, neopentyl glycol diacrylate, polyethylene glycol diacrylate, propoxylated neopentyl glycol diacrylate, tetraethylene glycol diacrylate, tricyclodecanedimethanol diacrylate, triethylene glycol diacrylate, tripropylene glycol diacrylate;
(b) tri(meth)acryl containing monomers such as glycerol triacrylate, trimethylolpropane triacrylate, ethoxylated triacrylates (e.g., ethoxylated trimethylolpropane triacrylate), propoxylated triacrylates (e.g., propoxylated glyceryl triacrylate, propoxylated trimethylolpropane triacrylate), trimethylolpropane triacrylate, tris(2-hydroxyethyl)isocyanurate triacrylate;
(c) higher functionality (meth)acryl containin monomer such as ditrimethylolpropane tetraacrylate, dipentaerythritol pentaacrylate, pentaerythritol triacrylate, ethoxylated pentaerythritol tetraacrylate, and caprolactone modified dipentaerythritol hexaacrylate.

Oligomeric (meth)acryl monomers such as, for example, urethane acrylates, polyester acrylates, and epoxy acrylates can also be employed.

Such (meth)acrylate monomers are widely available from vendors such as, for example, Sartomer Company of Exton, Pennsylvania; Cytec Industries of Woodland Park, N; and Aldrich Chemical Company of Milwaukee, Wisconsin.

In some embodiments, the hardcoat composition comprises (e.g. solely) a crosslinking agent as the second (meth)acrylate monomer comprising at least three (meth)acrylate functional groups. In some embodiments, the second crosslinking monomer comprises at least four, five or six (meth)acrylate functional groups. Acrylate functional groups tend to be favored over (meth)acrylate functional groups.

Preferred commercially available crosslinking agent include for example trimethylolpropane triacrylate (commercially available from Sartomer Company, Exton, PA under the trade designation "SR351"), ethoxylated trimethylolpropane triacrylate (commercially available from Sartomer Company, Exton, PA under the trade designation "SR454"), pentaerythritol tetraacrylate, pentaerythritol triacrylate (commercially available from Sartomer under the trade designation "SR444"), dipentaerythritol pentaacrylate (commercially available from Sartomer under the trade designation "SR399"), ethoxylated pentaerythritol tetraacrylate, ethoxylated pentaerythritol triacrylate (from Sartomer under the trade designation "SR494"), dipentaerythritol hexaacrylate, and tris(2-hydroxy ethyl) isocyanurate triacrylate (from Sartomer under the trade designation "SR368".

In some embodiments, the second (e.g. crosslinking) monomer does not comprise C₂-C₄ alkoxy repeat units.

The concentration of the total amount of second monomer(s) in the cured hardcoat composition is typically at least 5 wt-% or 10 wt-% solids and generally no greater than 40, 35 or 30 wt-% solids. In some embodiments, the total amount of second monomer(s) ranges from 10 to 25 wt-% solids. In other embodiments, the total amount of second monomer(s) ranges from 5 to 15 wt-% solids.

In other embodiments, the hardcoat composition may comprise a blend of two or more monomers such as a crosslinking agent (e.g. lacking C₂-C₄ alkoxy repeat units) comprising at least three (meth)acrylate functional groups and at least one di(meth)acrylate monomer or oligomer. The concentration of the di(meth)acrylate monomer or oligomer is typically no greater than 15, or 10, or 5 wt-% solids of the total hardcoat composition.

The hardcoat composition comprises surface modified inorganic oxide, as defined in the claims, that add mechanical strength and durability to the resultant coating. The particles are typically substantially spherical in shape and relatively uniform in size. The particles can have a substantially monodisperse size distribution or a polymodal distribution obtained by blending two or more substantially monodisperse distributions. The inorganic oxide particles are typically non-aggregated (substantially discrete), as aggregation can result in precipitation of the inorganic oxide particles or gelation of the hardcoat.

The size of inorganic oxide particles is chosen to avoid significant visible light scattering. The hard coat composition generally comprises a significant amount of surface modified inorganic oxide nanoparticles having an average (e.g. unassociated) primary particle size or associated particle size of at least 30, 40 or 50 nm and no greater than about 200, 175 or 150 nm. When the hardcoat composition lacks a significant amount of inorganic nanoparticles of such size, the cured hardcoat can crack when subjected to the pencil hardness test described herein. The total concentration of inorganic oxide nanoparticles is typically a least 30, 35, or 40 wt-% solids and generally no greater than 90 wt-%, 80 wt-%, or 75 wt-% and in some embodiments no greater than 70 wt-%, or 65 wt-%, or 60 wt-% solids.

The hardcoat composition may comprise up to about 10 wt-% solids of smaller nanoparticles. Such inorganic oxide nanoparticles typically having an average (e.g. unassociated) primary particle size or associated particle size of at least 1 nm or 5 nm and no greater than 50, 40, or 30 nm.

The average particle size of the inorganic oxide particles can be measured using transmission electron microscopy to count the number of inorganic oxide particles of a given diameter. The inorganic oxide particles consist of a single oxide such as silica, or can comprise a combination of oxides, or a core of an oxide of one type (or a core of a material other than a metal oxide) on which is deposited an oxide of another type. Silica is a common inorganic particle utilized in hardcoat compositions. The inorganic oxide particles are often provided in the form of a sol containing a colloidal dispersion of inorganic oxide particles in liquid media. The sol can be prepared using a variety of techniques and in a variety of forms including hydrosols (where water serves as the liquid medium), organosols (where organic liquids so serve), and mixed sols (where the liquid medium contains both water and an organic liquid).

Aqueous colloidal silicas dispersions are commercially available from Nalco Chemical Co., Naperville, IL under the trade designation "Nalco Collodial Silicas" such as products 1040, 1042, 1050, 1060, 2327, 2329, and 2329K or Nissan Chemical America Corporation, Houston, TX under the trade name Snowtex™. Organic dispersions of colloidal silicas are commercially available from Nissan Chemical under the trade name Organosilicasol™. Suitable fumed silicas include for example, products commercially available from Evonki DeGussa Corp., (Parsippany, NJ) under the trade designation, "Aerosil series OX-50", as well as product numbers -130, -150, and -200. Fumed silicas are also commercially available from Cabot Corp., Tuscola, IL, under the trade designations CAB-O-SPERSE 2095", "CAB-O-SPERSE A105", and "CAB-O-SIL M5".

It may be desirable to employ a mixture of inorganic oxide particle types to optimize an optical property, material property, or to lower that total composition cost.

As an alternative to or in combination with silica the hardcoat may comprise various high refractive index inorganic nanoparticles. Such nanoparticles have a refractive index of at least 1.60, 1.65, 1.70, 1.75, 1.80, 1.85, 1.90, 1.95, 2.00 or higher. High refractive index inorganic nanoparticles include for example zirconia ("ZrO₂"), titania ("TiO₂"), antimony oxides, alumina, tin oxides, alone or in combination. Mixed metal oxide may also be employed.

Zirconias for use in the high refractive index layer are available from Nalco Chemical Co. under the trade designation "Nalco OOSS008", Buhler AG Uzwil, Switzerland under the trade designation "Buhler zirconia Z-WO sol" and Nissan Chemical America Corporation under the trade name NanoUse ZR™. Zirconia nanoparticles can also be prepared such as described in U.S. Patent Publication No. 2006/0148950 and U.S. Patent No. 6,376,590. A nanoparticle dispersion that comprises a mixture of tin oxide and zirconia covered by antimony oxide (RI∼1.9) is commercially available from Nissan Chemical America Corporation under the trade designation "HX-05M5". A tin oxide nanoparticle dispersion (RI∼2.0) is commercially available from Nissan Chemicals Corp. under the trade designation "CX-S401M". Zirconia nanoparticles can also be prepared such as described in U.S. Patent No. 7,241,437 and U.S. Patent No. 6,376,590.

The inorganic nanoparticles of the hardcoat are preferably treated with a surface treatment agent. Surface-treating the nano-sized particles can provide a stable dispersion in the polymeric resin. Preferably, the surface-treatment stabilizes the nanoparticles so that the particles will be well dispersed in the polymerizable resin and results in a substantially homogeneous composition. Furthermore, the nanoparticles can be modified over at least a portion of their surface with a surface treatment agent so that the stabilized particle can copolymerize or react with the polymerizable resin during curing. The incorporation of surface modified inorganic particles is amenable to covalent bonding of the particles to the free-radically polymerizable organic components, thereby providing a tougher and more homogeneous polymer/particle network.

In general, a surface treatment agent has a first end that will attach to the particle surface (covalently, ionically or through strong physisorption) and a second end that imparts compatibility of the particle with the resin and/or reacts with resin during curing. Examples of surface treatment agents include alcohols, amines, carboxylic acids, sulfonic acids, phosphonic acids, silanes and titanates. The preferred type of treatment agent is determined, in part, by the chemical nature of the metal oxide surface. Silanes are preferred for silica and other for siliceous fillers. Silanes and carboxylic acids are preferred for metal oxides such as zirconia. The surface modification can be done either subsequent to mixing with the monomers or after mixing. It is preferred in the case of silanes to react the silanes with the particle or nanoparticle surface before incorporation into the resin. The required amount of surface modifier is dependent upon several factors such as particle size, particle type, modifier molecular wt, and modifier type. In general, it is preferred that approximately a monolayer of modifier is attached to the surface of the particle. The attachment procedure or reaction conditions required also depend on the surface modifier used. For silanes it is preferred to surface treat at elevated temperatures under acidic or basic conditions for from 1-24 hr approximately. Surface treatment agents such as carboxylic acids may not require elevated temperatures or extended time.

The silane surface treatments comprise one or more alkoxy silane groups when added to the inorganic oxide (e.g. silica) dispersions. The alkoxy silane group(s) hydrolyze with water (present in the nanoparticle dispersion) to form Si-OH, (hydroxy groups). These SiOH groups then react with SiOH groups on the nano-silica surface to form silane surface treated nano-silica.

In some embodiments, the inorganic oxide silica nanoparticles are separately surface modified with a copolymerizable and non-polymerizable silane surface treatment and the hardcoat comprises a mixture of both types of surface modified inorganic oxide silica nanoparticles. In other embodiments, the inorganic oxide silica nanoparticles are concurrently surface modified with both a copolymerizable and a non-polymerizable silane surface treatment.

The inorganic oxide silica nanoparticles comprise at least one copolymerizable silane surface treatment. The copolymerizable silane surface treatment comprises a free-radically polymerizable group, such as a meth(acryl) or vinyl. The free-radically polymerizable group copolymerizes with the free-radically polymerizable (e.g. (meth)acrylate) monomers of the hardcoat composition.

Suitable (meth)acryl organosilanes include for example (meth)acryloy alkoxy silanes such as 3-(methacryloyloxy)propyltrimethoxysilane, 3-acryloylxypropyltrimethoxysilane, 3-(methacryloyloxy)propylmethyldimethoxysilane, 3-(acryloyloxypropyl)methyl dimethoxysilane, 3-(methacryloyloxy)propyldimethylmethoxysilane, and 3-(acryloyloxypropyl) dimethylmethoxysilane. In some embodiments, the (meth)acryl organosilanes can be favored over the acryl silanes. Suitable vinyl silanes include vinyldimethylethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, vinyltris(2-methoxyethoxy)silane. Suitable amino organosilanes are described for example in US2006/0147177; incorporated herein by reference.

In favored embodiments, the copolymerizable silane surface treatment may have the general formula

X¹-L¹-SiRₘ(OR¹)₃₋ₘ;

wherein X¹ is a free-radically polymerizable group, such as (meth)acryl or vinyl; L¹ is an organic divalent linking group having 1 to 12 carbon atoms;
R is independently C₁-C₄ alkyl and most typically methyl or ethyl;
R¹ is independently H or C₁-C₄ alkyl and most typically methyl or ethyl; and
m ranges from 0 to 2.

In typical embodiments, L¹ is an alkylene group. In some embodiments, L¹ is an alkylene group having 1, 2 or 3 carbon atoms. In other embodiments, L¹ comprises or consist of an aromatic group such as phenyl or (e.g. C₁-C₄) alkyl phenyl.

The inorganic oxide silica nanoparticles further comprise at least one non-copolymerizable silane surface treatment, i.e. a surface treatment lacking a free-radically polymerizable group.

In favored embodiments, the non-copolymerizable surface treatment is a silane surface treatment compound having the general formula

X-L-SiRₘ(OR¹)₃₋ₘ

wherein X is an organic group comprising 3 to 12 carbon atoms;
L is a covalent bond or an organic divalent linking group having 1 to 12 carbon atoms;
R is independently C₁-C₄ alkyl and most typically methyl or ethyl;
R¹ is independently H or C₁-C₄ alkyl and most typically methyl or ethyl; and m ranges from 0 to 2.

In typical embodiments, L is an alkylene group. In some embodiments, L¹ is an alkylene group having 1, 2 or 3 carbon atoms. In some embodiments, X comprises or consists of an aromatic group, such as phenyl. In some embodiments, X-L is an alkyl group, such as 6-methylheptyl (i.e. isooctyl).

In some embodiments, the preferred surface treatment compounds can be characterized by surface tension. As used herein, surface tension refers to the values reported by www. chemspider.com that were calculated by use of ACD/PhyChem Suite software. Both the copolymerizable and non-polymerizable silane surface treatments may independently have a surface tension ranging from about 22 to 29 dynes/cm. Representative surface treatments having surface tensions within this range are as follows.

| **Silane Surface Treatment** | **Chemical Structure** | **Surface Tension (dyne/cm)** |
|---|---|---|
| 3 -(trimethoxysilyl)propyl acetate | 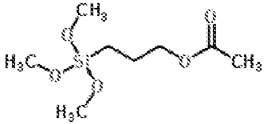 | 25.8 |
| phenylethyltrimethoxysilane | 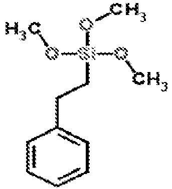 | 28.0 |
| trimethoxy(6-methylheptyl)silane | 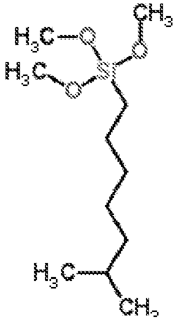 | 23.7 |
| phenyltrimethoxysilane | 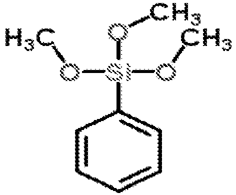 | 27.7 |
| 3-(methacryloxy)propyl trimethoxysilane | 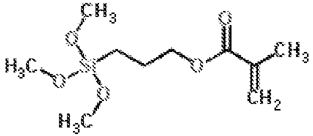 | 26.1 |

In some embodiments, the copolymerizable and/or non-polymerizable silane surface treatments typically have a surface tension of at least 23, 24, or 25 dynes/cm. In some embodiments, the non-polymerizable surface treatment differs in surface tension from the polymerizable surface tension by no greater than about 2 dynes/cm.

The inorganic nanoparticle may optionally further comprise various other surface treatments, as known in the art, such as a copolymerizable surface treatment comprising at least one non-volatile monocarboxylic acid having more than six carbon atom or a non-reactive surface treatment comprising a (e.g. polyether) water soluble tail.

The total amount of surface treatment compound can vary depending on the concentration of surface modified inorganic oxide (e.g. silica) nanoparticles added to the hardcoat composition and the particle size of the inorganic oxide (e.g. silica) nanoparticles. Typically however, the hardcoat comprises at least 0.50, 0.60, 0.70, 0.80, or 0.90 wt-% solids of copolymerizable surface treatment and no greater than 10 wt-% solids copolymerizable surface treatment. When the copolymerizable surface treatment is relatively low in molecular weight, such as in the case of 3-(methacryloxy)propyltrimethoxysilane, the concentration of surface treatment compound in the hardcoat composition is typically no greater than 5, 4, or 3 wt-% solids and in some favored embodiments, no greater than 2.5, 2.0, 1.5 or 1.0 wt-% solids.

The hardcoat typically comprises at least 0.20, 0.30, 0.40, 0.50 wt-% solids of non-polymerizable surface treatment and no greater than 10 wt-% solids copolymerizable surface treatment. In some embodiments, the concentration of non-polymerizable surface treatment compound in the hardcoat composition is typically no greater than 5 wt-% solids and in some favored embodiments, no greater than 4, 3, or 2 wt-% solids.

The weight ratio of non-copolymerizable to copolymerizable surface treatment compound can vary. In some embodiments the weight ratio can vary from 1:10 to 5:1. In some embodiments, the amount by weight of the polymerizable surface treatment compound is equal to or greater than the amount by weight of the non-polymerizable surface treatment. In this embodiment, the weight ratio of polymerizable surface treatment compound to non-polymerizable surface treatment compound can range from about 1:1 to about 5:1.

The inclusion of the non-copolymerizable surface treatment in the dried and cured hardcoat can improve the abrasion resistance and/or reduce the curl. In typical embodiments, the change in haze according to the abrasion test (as further described in the examples) is less than 5, 4, or 3% and preferably less than 2, 1.5, or 1%. Most preferably the change in haze is zero. However, a change is haze of 0.1, 0.2, 0.3, 0.4 or 0.5 is typically acceptable. The curl (as further described in the examples) is typically less than 30 or 25 mm and in some embodiments less than 20, 15, or 10 mm. The dried and cured hardcoat can exhibit no cracking when tested according to JISK5600-5-4:1999 with a #8H pencil and a 750 gram weight. However, depending on the end use, a lower pencil hardness may be suitable. The dried and cured hardcoat can also exhibit no cracking when tested with a mandrel having a diameter of 22, 21 or 20 mm. In some embodiments, the dried and cured hardcoat exhibits no cracking when tested with a mandrel of 15 or 10 mm. Further, the dried and cured hardcoat can exhibit various combinations of such properties. The properties of the dried and cured hardcoat are dependent at least in part on the thickness of the hardcoat and the substrate the hardcoat is disposed upon. As used herein such properties are described with respect to a dried and cured hardcoat having a thickness of 14 microns disposed on polyester film having a thickness of 5 mils (0.13 mm).

To facilitate curing, polymerizable compositions described herein may further comprise at least one free-radical thermal initiator and/or photoinitiator. Typically, if such an initiator and/or photoinitiator are present, it comprises less than about 10 percent by weight, more typically less than about 5 percent of the polymerizable composition, based on the total weight of the polymerizable composition. Free-radical curing techniques are well known in the art and include, for example, thermal curing methods as well as radiation curing methods such as electron beam or ultraviolet radiation. Useful free-radical photoinitiators include, for example, those known as useful in the UV cure of acrylate polymers such as described in WO2006/102383.

The hardcoat composition may optionally comprise various additives. For example, silicone or fluorinated additive may be added to lower the surface energy of the hardcoat.

In one embodiment, the hardcoat coating composition further comprises at least 0.005 and preferably at least 0.01 wt-% solids of one or more perfluoropolyether urethane additives, such as described in US 7,178,264. The total amount of perfluoropolyether urethane additives alone or in combination with other fluorinated additives typically ranges up to 0.5 or 1 wt-% solids.

The perfluoropolyether urethane material is preferably prepared from an isocyanate reactive HFPO- material. Unless otherwise noted, "HFPO-" refers to the end group F(CF(CF₃)CF₂O)ₐCF(CF₃)- of the methyl ester F(CF(CF₃)CF₂O)ₐCF(CF₃)C(O)OCH₃, wherein "a" averages 2 to 15. In some embodiments, a averages between 3 and 10 or a averages between 5 and 8. Such species generally exist as a distribution or mixture of oligomers with a range of values for a, so that the average value of a may be non-integer. For example, in one embodiment, "a" averages 6.2. The molecular weight of the HFPO- perfluoropolyether material varies depending on the number ("a") of repeat units from about 940 g/mole to about 1600 g/mole, with 1100 g/mole to 1400 g/mole typically being preferred.

In one embodiment, the reaction product comprises a perfluoropolyether urethane additive of the formula:

Rᵢ-(NHC(O)XQR_{f})ₘ,-(NHC(O)OQ(A)ₚ)ₙ;

wherein
Rᵢ is the residue of a multi-isocyanate;
X is O, S or NR, wherein R is H or an alkyl group having 1 to 4 carbon;
R_{f} is a monovalent perfluoropolyether moiety comprising groups of the formula F(R_{fc}O)ₓC_{d}F_{2d}-, wherein each R_{fc} is independently a fluorinated alkylene group having from 1 to 6 carbon atoms, each x is an integer greater than or equal to 2, and wherein d is an integer from 1 to 6; each Q is independently a connecting group having a valency of at least 2; A is a (meth)acryl functional group -XC(O)C(R₂)=CH₂ wherein R₂ is an alkyl group of 1 to 4 carbon atoms or H or F;
m is at least 1; n is at least 1; p is 2 to 6; m + n is 2 to 10; wherein each group having subscripts m and n is attached to the Rᵢ unit.

Q in association with the Rf group is a straight chain, branched chain, or cycle-containing connecting group. Q can include an alkylene, an arylene, an aralkylene, an alkarylene. Q can optionally include heteroatoms such as O, N, and S, and combinations thereof. Q can also optionally include a heteroatom-containing functional group such as carbonyl or sulfonyl, and combinations thereof.

When X is O, Q is typically not methylene and thus contains two or more carbon atoms. In some embodiments, X is S or NR. In some embodiments, Q is an alkylene having at least two carbon atoms. In other embodiments, Q is a straight chain, branched chain, or cycle-containing connecting group selected from arylene, aralkylene, and alkarylene. In yet other embodiments, Q contains a heteroatom such as O, N, and S and/or a heteroatom containing functional groups such as carbonyl and sulfonyl. In other embodiments, Q is a branched or cycle-containing alkylene group that optionally contains heteroatoms selected from O, N, S and/or a heteroatom-containing functional group such as carbonyl and sulfonyl. In some embodiments Q contains a nitrogen containing group such an amide group such as -C(O)NHCH₂CH₂-, -C(O)NH(CH₂)₆-, and-C(O)NH(CH₂CH₂O)₂CH₂CH₂-.

If the mole fraction of isocyanate groups is given a value of 1.0, then the total mole fraction of m and n units used in making the perfluoropolyether urethane additive material is 1.0 or greater. The mole fractions of m:n ranges from 0.95: 0.05 to 0.05:0.95. Preferably, the mole fractions of m:n are from 0.50: 0.50 to 0.05:0.95. More preferably, the mole fractions of m:n are from 0.25: 0.75 to 0.05:0.95 and most preferably, the mole fractions of m:n are from 0.25:0.75 to 0.10:0.95. In the instances the mole fractions of m:n total more than one, such as 0.15:0.90, the m unit is reacted onto the isocyanate first, and a slight excess (0.05 mole fraction) of the n units are used.

In a formulation, for instance, in which 0.15 mole fractions of m and 0.85 mole fraction of n units are introduced, a distribution of products is formed in which some fraction of products formed contain no m units.

One representative reaction product formed by the reaction product of a biuret of HDI with one equivalent of HFPO oligomer amidol HFPO-C(O)NHCH₂CH₂OH wherein "a" averages 2 to 15, and further with two equivalents of pentaerythritol triacrylate is shown as follows

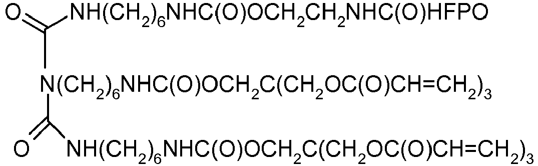

Various other reactants can be included in the preparation of the perfluoropolyether urethane such as described in WO2006/102383 and U.S. Patent Publication No. US2008/0124555, entitled "Polymerizable Composition Comprising Perfluoropolyether Urethane Having Ethylene Oxide Repeat Units"; incorporated herein by reference.

Certain silicone additives have also been found to provide ink repellency in combination with low lint attraction, as described in WO 2009/029438; incorporated herein by reference. Such silicone (meth)acrylate additives generally comprise a polydimethylsiloxane (PDMS) backbone and at least one alkoxy side chain terminating with a (meth)acrylate group. The alkoxy side chain may optionally comprise at least one hydroxyl substituent. Such silicone (meth)acrylate additives are commercially available from various suppliers such as Tego Chemie under the trade designations TEGO Rad 2300 "TEGO Rad 2250", "TEGO Rad 2300", "TEGO Rad 2500", and "TEGO Rad 2700". Of these, "TEGO Rad 2100" provided the lowest lint attraction.

Based on NMR analysis "TEGO Rad 2100" and "TEGO Rad 2500" are believed to have the following chemical structure: 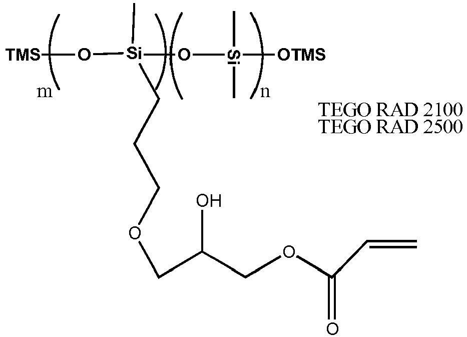 wherein n ranges from 10 to 20 and m ranges from 0.5 to 5.

In some embodiments, n ranges from 14 to 16 and m ranges from 0.9 to 3. The molecular weight typically ranges from about 1000 g/mole to 2500 g/mole.

The silicone (meth)acrylate additive can be added to the hardcoat composition alone or in combination with the perfluoropolyether urethane additive. The concentration of silicone (meth)acrylate additive may range from at least about 0.10, 0.20, 0.30, 0.40, or 0.50 wt-% solids of the hardcoat composition to as much as 1 to 3 wt-% solids of the hardcoat composition.

Based on Thermal Gravimetric Analysis (as described in WO 2009/029438), silicone (meth)acrylates having a residue content of less than 12 wt-% provided the lowest haze values according to the Cellulose Surface Attraction Test. The surface layers (e.g. comprising such silicone (meth)acrylate additives) preferably have a haze of less than 20%, more preferably less than 10% and even more preferably less than 5% according to the Cellulose Surface Attraction Test.

The cured surface layer and coated articles exhibit "ink repellency" when ink from a pen, commercially available under the trade designation "Sharpie", beads up into discrete droplets and can be easily removed by wiping the exposed surface with tissues or paper towels, such as tissues available from the Kimberly Clark Corporation, Roswell, GA under the trade designation "SURPASS FACIAL TISSUE."

The polymerizable compositions can be formed by dissolving the free-radically polymerizable material(s) in a compatible organic solvent and then combined with the nanoparticle dispersion (that comprises the surface treated inorganic oxide (e.g. silica) nanoparticles) at a concentration of about 40 to 60 percent solids. A single organic solvent or a blend of solvents can be employed. Depending on the free-radically polymerizable materials employed, suitable solvents include alcohols such as isopropyl alcohol (IPA) or ethanol; ketones such as methyl ethyl ketone (MEK), methyl isobutyl ketone (MIBK), diisobutyl ketone (DIBK); cyclohexanone, or acetone; aromatic hydrocarbons such as toluene; isophorone; butyrolactone; N-methylpyrrolidone; tetrahydrofuran; esters such as lactates, acetates, including propylene glycol monomethyl ether acetate such as commercially available from 3M under the trade designation "3M Scotchcal Thinner CGS10" ("CGS10"), 2-butoxyethyl acetate such as commercially available from 3M under the trade designation "3M Scotchcal Thinner CGS50" ("CGS50"), diethylene glycol ethyl ether acetate (DE acetate), ethylene glycol butyl ether acetate (EB acetate), dipropylene glycol monomethyl ether acetate (DPMA), iso-alkyl esters such as isohexyl acetate, isoheptyl acetate, isooctyl acetate, isononyl acetate, isodecyl acetate, isododecyl acetate, isotridecyl acetate or other iso-alkyl esters; combinations of these and the like.

The hardcoat composition can be applied as a single or multiple layers to a (e.g. display surface or film) substrate using conventional film application techniques. Thin films can be applied using a variety of techniques, including dip coating, forward and reverse roll coating, wire wound rod coating, and die coating. Die coaters include knife coaters, slot coaters, slide coaters, fluid bearing coaters, slide curtain coaters, drop die curtain coaters, and extrusion coaters among others. Many types of die coaters are described in the literature. Although it is usually convenient for the substrate to be in the form of a roll of continuous web, the coatings may be applied to individual sheets.

The hardcoat composition is dried in an oven to remove the solvent and then cured for example by exposure to ultraviolet radiation using an H-bulb or other lamp at a desired wavelength, preferably in an inert atmosphere (less than 50 parts per million oxygen). The reaction mechanism causes the free-radically polymerizable materials to crosslink.

The thickness of the (i.e. dried and/or cured) hardcoat surface layer is typically at least 0.5 microns, 1 micron, or 2 microns. The thickness of the hardcoat layer is generally no greater than 50, 40, 35, 30, or 25 microns. In some embodiments, the thickness ranges from about 5 microns to 25 microns.

Due to its optical clarity, the hardcoat described herein is particularly useful for application to light-transmissive film substrates or optical displays. The light transmissive substrate may comprise or consist of any of a wide variety of non-polymeric materials, such as glass, or various thermoplastic and crosslinked polymeric materials, such as polyethylene terephthalate (PET), (e.g. bisphenol A) polycarbonate, cellulose acetate, poly(methyl methacrylate), and polyolefins such as biaxially oriented polypropylene which are commonly used in various optical devices. Further, the substrate may comprise a hybrid material, having both organic and inorganic components. The substrate and cured hardcoat have a transmission of at least 80%, at least 85%, and preferably at least 90%. The initial haze (i.e. prior to abrasion testing) of the substrate and cured hardcoat can be less than 1 or 0.5, or 0.4, or 0.2%.

The hardcoat described herein may be applied to one or both major surfaces of a light-transmissive film forming a protective film.

Various light transmissive optical films are suitable for use as the film substrate including but not limited to, multilayer optical films, microstructured films such as retroreflective sheeting and brightness enhancing films, (e.g. reflective or absorbing) polarizing films, diffusive films, as well as (e.g. biaxial) retarder films and compensator films.

For most applications, the substrate thicknesses is preferably less than about 0.5 mm, and more preferably about 20 microns to about 100, 150, or 200 microns. Self-supporting polymeric films are preferred. The polymeric material can be formed into a film using conventional filmmaking techniques such as by extrusion and optional uniaxial or biaxial orientation of the extruded film. The substrate can be treated to improve adhesion between the substrate and the adjacent layer, e.g., chemical treatment, corona treatment such as air or nitrogen corona, plasma, flame, or actinic radiation. If desired, an optional tie layer or primer can be applied to the protective film or display substrate to increase the interlayer adhesion with the hardcoat.

In order to reduce or eliminate optical fringing it is preferred that the substrate has a refractive index close to that of the hardcoat layer, i.e. differs from the high refractive index layer by less than 0.05, and more preferably less than 0.02. When the substrate has a high refractive index, a high refractive index primer may be use such as a sulfopolyester antistatic primer, as described in US2008/0274352. Alternatively, optical fringing can be eliminated or reduced by providing a primer on the film substrate or illuminated display surface having a refractive index intermediate (i.e. median +/- 0.02) between the substrate and the hardcoat layer. Optical fringing can also be eliminated or reduced by roughening the substrate to which the hardcoat is applied. For example the substrate surface may be roughened with a 9 micron to 30 micro microabrasive.

The cured hardcoat layer or film substrate to which the hardcoat is applied may have a gloss or matte surface. Matte films typically have lower transmission and higher haze values than typical gloss films. For examples the haze is generally at least 5%, 6%, 7%, 8%, 9%, or 10% as measured according to ASTM D1003. Whereas gloss surfaces typically have a gloss of at least 130 as measured according to ASTM D 2457-03 at 60°; matte surfaces have a gloss of less than 120.

The hardcoat surface can be roughened or textured to provide a matte surface. This can be accomplished in a variety of ways as known in the art including embossing the hardcoat surface with a suitable tool that has been bead-blasted or otherwise roughened, as well as by curing the composition against a suitable roughened master as described in U.S. Pat. Nos. 5,175,030 (Lu et al.) and 5,183,597 (Lu).

Further, various permanent and removable grade adhesive compositions may be provided on the opposite side of the film substrate as the cured hardcoat. For embodiments that employ pressure sensitive adhesive, the protective film article typically includes a removable release liner. During application to a display surface, the release liner is removed so the protective film article can be adhered to the display surface.

Suitable adhesive compositions include (e.g. hydrogenated) block copolymers such as those commercially available from Kraton Polymers, Westhollow, TX under the trade designation "Kraton G-1657", as well as other (e.g. similar) thermoplastic rubbers. Other exemplary adhesives include acrylic-based, urethane-based, silicone-based and epoxy-based adhesives. Preferred adhesives are of sufficient optical quality and light stability such that the adhesive does not yellow with time or upon weather exposure so as to degrade the viewing quality of the optical display. The adhesive can be applied using a variety of known coating techniques such as transfer coating, knife coating, spin coating, die coating and the like. Exemplary adhesives are described in U.S. Patent Application Publication No. 2003/0012936. Several of such adhesives are commercially available from 3M Company, St. Paul, MN under the trade designations 8141, 8142, and 8161.

The hardcoat described herein or a protective film can be employed with a variety of portable and non-portable information display articles. The displays include various illuminated and non-illuminated display articles. Such displays include multi-character and especially multiline multi-character displays such as liquid crystal displays ("LCDs"), plasma displays, front and rear projection displays, cathode ray tubes ("CRTs"), signage, as well as single-character or binary displays such as light emitting tubes ("LEDs"), signal lamps and switches.

Illuminated display articles include, but are not limited to, PDAs, LCD-TV's (both edge-lit and direct-lit), cell phones (including combination PDA/cell phones), touch sensitive screens, wrist watches, car navigation systems, global positioning systems, depth finders, calculators, electronic books, CD and DVD players, projection televisions screens, computer monitors, notebook computer displays, instrument gauges, and instrument panel covers. These devices can have planar or curved viewing faces. In a favored embodiment, the hardcoat or protective film comprising such can be used in place of a cover glass used to protect the touch screen from becoming scratched.

In one embodiment, the protective film or cured hardcoat (e.g. applied to a glass substrate), as described herein, is a surface layer of a touch screen, or a component there such as a touch sensor film substrate or a touch module comprising an assembly of touch sensor substrates.

A touch screen is generally a component of a computer display screen that enables sensitivity to human touch, allowing a user to interact with the computer by touching the screen. A touch screen can include multiple touch sensor substrates and optionally a cover glass or a cover film. A touch screen can also be referred to as a touch module. There are several types of touch screens. Alternatives to projected capacitive (i.e. non-projected capacitive) touch screens include resistive touch screen, digital resistive touch screen, surface acoustic touch screen, surface capacitive touch screen, and inductive touch screen.

A projected capacitive touch screen panel is coated with a material that transports electrical charges. A projected capacitive touch screen can be patterned with a plurality of conductive electrodes. When the panel is touched, a small amount of charge is drawn along the electrodes to the point of contact. Circuits connected to each of the electrodes measure the charge and send the information to the controller for processing. Various projected capacitive touch screen are known. Example of touch screens include those described in US 7,030,860; US 7,463,246; US 7,663,607; US 7,932,898; US 8,179,381; US 8,243,027; US 2008/0266273; and US 2012/0256878; each of which are incorporated herein by reference.

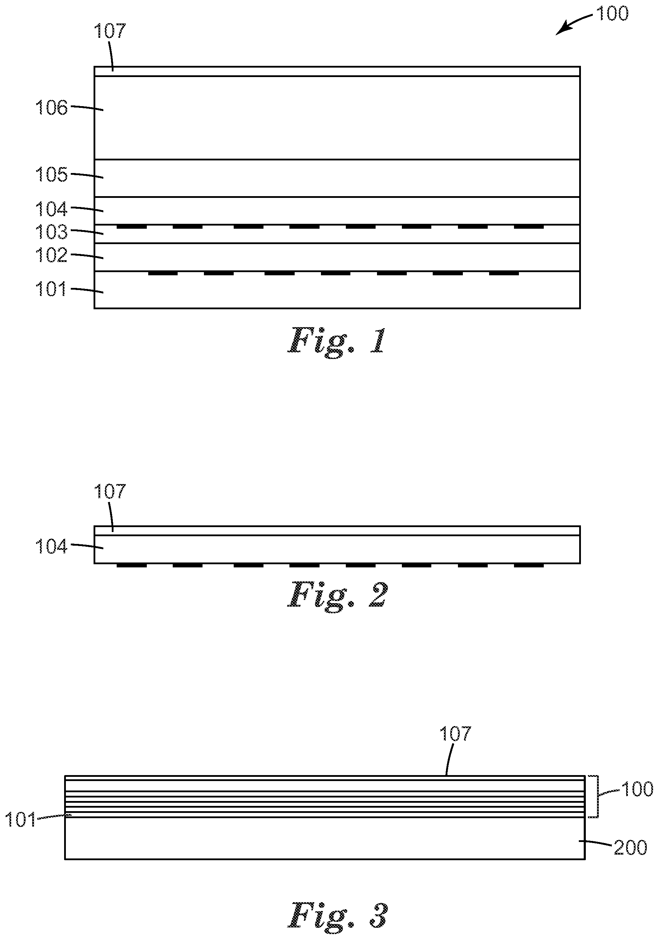

In one embodiment, a touch sensor film substrate is described comprising a set of patterned electrode and a cured hardcoat or protective film comprising the cured hardcoat disposed on the touch sensor film substrate such that the cured hardcoat forms a protective surface layer. With reference to Figure 1, the touch sensor film substrate **104** having a set of patterned electrodes (such as described US 8,179,381) may be bonded (with an optically clear adhesive **105**) to protective film substrate **106** including hardcoat **107.** Alternatively, **106** may be a glass substrate.

In another embodiment, hardcoat **107** may be disposed directly on touch sensor film substrate **104,** as depicted in Figure 2.

In another embodiment, a touch screen is described comprising a pair of touch sensor film substrates. With reference to Figure 1, touch screen **100** comprises a second sensor film substrate **102** having a set of patterned electrodes (such as described US 8,179,381) bonded (with an optically clear adhesive **103**) to the first sensor film substrate **104.** Touch sensor film substrate **104** may be bonded (with an optically clear adhesive **105**) to protective film substrate **106** including hardcoat **107.** In another embodiment, touch sensor film substrate **104** may be bonded (with an optically clear adhesive **105**) to glass (not shown) in place of protective film substrate **106** including hardcoat **107.** In yet another embodiment, hardcoat **107** may be disposed directly on touch sensor film substrate **104,** as depicted in Figure 2 (wherein layers 105 and 106 are absent).

The display article comprises touch screen **100** bonded to illuminated display **200** (with optically clear adhesive **101**), as depicted in Figure 3. Non-illuminated display articles include, but are not limited to. (e.g. retroreflective) signage and commercial graphic display films employed for various advertising, promotional, and corporate identity uses.

The hardcoat material can be employed on a variety of other articles as well such as for example camera lenses, eyeglass lenses, binocular lenses, mirrors, automobile windows, building windows, train windows, boat windows, aircraft windows, vehicle headlamps and taillights, display cases, eyeglasses, overhead projectors, stereo cabinet doors, stereo covers, watch covers, as well as optical and magneto-optical recording disks, and the like.

### EXAMPLES

### Components Utilized in the Examples

**Esacure One** is a photoinitiator and is available from Lamberti USA (Conshohocken PA). **SR399** from Sartomer USA (Exton PA) is a dipentaerythritol pentaacrylate resin.

The perfluoropolyether urethane multi-acrylate **(HFPOUA)** was prepared according to the procedure outlined in US 7,178,264, Preparation No. 6 (Preparation of Des N100/0.90 PET3A/0.15 HFPO), with the following exceptions: The molar ratios of materials used were adjusted to 1.0 Des N100/0.95 PET3A/0.10 HFPO; the HFPO amidol was added over about 30 minutes instead of all at once at the beginning of the reaction; and the reaction was run at 66% solids in acetone instead of at 50% solids in methyl ethyl ketone.

**SR9035** from Sartomer USA is an ethoxylated (15) trimethylolpropane triacrylate, reported to have a molecular weight of 956 g/mole.

**SR344** from Sartomer USA is a polyethylene glycol (400) diacrylate.

**SR444C** from Sartomer USA is a pentaerythritol triacrylate resin

**3-(methacryloxy)propyltrimethoxysilane treated silica** dispersion (A174 Treated Silica 36.7 wt-% solids) was prepared as follows: A 1000 ml 3-neck flask equipped with a stir bar, stir plate, condenser, heating mantle and thermocouple/temperature controller was charged with 300 grams of Nalco 2329K (a 40 wt % solids dispersion of ∼75nm colloidal silica, Nalco Company, Naperville, IL). To this dispersion, 350 grams of 1-methoxy-2-propanol was added with stirring. Next 4.93 grams of 97% 3-(Methacryloxy)propyltrimethoxysilane (Alfa Aesar, Ward Hill MA), 0.3 grams of a 5wt% Prostab 5198 (BASF Corporation) aqueous solution and 50 grams 1-methoxy-2-propanol were added to a 100 grams poly beaker. The 3-(Methacryloxy)propyltrimethoxysilane/Prostab/1-methoxy-2-propanol mixture was added to the batch with stirring. The beaker containing the mixture was rinsed with aliquots of 1-methoxy-2-propanol totaling 50 grams. The rinses were added to the batch. The batch was heated to 80 °C and held for approximately 16 hours. The batch was cooled to room temperature and then transferred to a 2000 ml distillation flask. The water was removed from the batch by alternate vacuum distillation and addition of 400 grams 1-methoxy-2-propanol. The batch was concentrated by vacuum distillation to result in a very fluid translucent dispersion with 36.7 wt% solids. The batch was filtered through nylon mesh and transferred to a 16 ounce amber glass bottle.

**A174/Phenyltrimethoxysilane (1/2 mole ratio) Treated Silica** was prepared as follows: A 1000 ml 3-neck flask equipped with a stir bar, stir plate, condenser, heating mantle and thermocouple/temperature controller was charged with 300 grams of Nalco 2329K (a 40 wt % solids dispersion of ∼75nm colloidal silica, Nalco Company, Naperville, IL). To this dispersion, 350 grams of 1-methoxy-2-propanol was added with stirring. Next 3.29 grams of 97% 3-(Methacryloxy)propyltrimethoxysilane (Alfa Aesar, Ward Hill MA), 1.31 grams of phenyltrimethoxysilane (Alfa Aesar, Heysham, England), 0.3 grams of a 5wt% Prostab 5198 (BASF Corporation, Florham Park NJ) aqueous solution and 50 grams 1-methoxy-2-propanol were added to a 100 ml poly beaker. The 3-(Methacryloxy)propyltrimethoxysilane/phenyltrimethoxysilane/Prostab/1-methoxy-2-propanol mixture was added to the batch with stirring. The beaker containing the mixture was rinsed with aliquots of 1-methoxy-2-propanol totaling 50 grams. The rinses were added to the batch. The batch was heated to 80 °C and held for approximately 16 hours. The batch was cooled to room temperature and transferred to a 2000 ml distillation flask. The water was removed from the batch by alternate vacuum distillation and addition of 450 grams 1-methoxy-2-propanol. The batch was concentrated by vacuum distillation to result in a very fluid translucent dispersion with 37.7 wt% solids. The batch was filtered through nylon mesh and transferred to a 16 ounce amber glass bottle.

**A174/Isooctyltrimethoxysilane (2/1 mole ratio) Treated Silica** was prepared as follows: A 1000 ml 3-neck flask equipped with a stir bar, stir plate, condenser, heating mantle and thermocouple/temperature controller was charged with 300 grams of Nalco 2329K (a 40 wt % solids dispersion of ∼75nm colloidal silica, Nalco Company, Naperville, IL). To this dispersion, 350g of 1-methoxy-2-propanol was added with stirring. Next 3.29 grams of 97% 3-(Methacryloxy)propyltrimethoxysilane (Alfa Aesar, Ward Hill MA), 1.55grams of isooctyltrimethoxysilane (Gelest Inc, Morrisville, PA), 0.3 grams of a 5wt% Prostab 5198 (BASF Corporation, Florham Park NJ) aqueous solution and 50 grams of 1-methoxy-2-propanol were added to a 100 ml poly beaker. The 3-(Methacryloxy)propyltrimethoxysilane/ isooctyltrimethoxysilane/Prostab/1-methoxy-2-propanol mixture was added to the batch with stirring. The beaker containing the mixture was rinsed with aliquots of 1-methoxy-2-propanol totaling 50 grams. The rinses were added to the batch. The batch was heated to 80 °C and held for approximately 16 hours. The batch was cooled to room temperature and transferred to a 2000 ml distillation flask. The water was removed from the batch by alternate vacuum distillation and addition of 400 grams of 1-methoxy-2-propanol. The batch was concentrated by vacuum distillation to result in a very fluid translucent dispersion with 34.4 wt% solids. The batch was filtered through nylon mesh and transferred to a 16 ounce amber glass bottle.

**Phenyltrimethoxysilane Treated Silica** was prepared as follows: A 5000 ml 3-neck flask equipped with a stir bar, stir plate, condenser, heating mantle and thermocouple/temperature controller was charged with 1500 grams of Nalco 2329K (a 40 wt % solids dispersion of ∼75nm colloidal silica, Nalco Company, Naperville, IL). To this dispersion, 2000 grams of 1-methoxy-2-propanol was added with stirring. Next 19.69 grams of phenyltrimethoxysilane (Alfa Aesar, Heysham, England), 1.50 grams of a 5 wt% Prostab 5198 (BASF Corporation, Florham Park NJ) aqueous solution and 50 grams 1-methoxy-2-propanol were added to a 100 grams poly beaker. The phenyltrimethoxysilane/Prostab/1-methoxy-2-propanol mixture was added to the batch with stirring. The beaker containing the mixture was rinsed with aliquots of 1-methoxy-2-propanol totaling 200 grams. The rinses were added to the batch. The batch was heated to 80 °C and held for approximately 16 hours. The batch was cooled to room temperature and part of the batch was transferred to a 2000 ml distillation flask. The water was removed from the batch by alternate vacuum distillation and addition of 900 grams of 1-methoxy-2-propanol and the remainder of the batch. The batch was concentrated by vacuum distillation to result in a very fluid translucent dispersion with 43.0 wt% solids. The batch was filtered through nylon mesh and transferred to a 32 ounce amber glass bottle.

**3-(methacryloxy)propyltrimethoxysilane treated silica** dispersion (A174 Treated Silica 42 wt-% solids) was prepared as follows: A 1000 ml 3-neck flask equipped with a stir bar, stir plate, condenser, heating mantle and thermocouple/temperature controller was charged with 300 grams of Nalco 2329K (a 40 wt % solids dispersion of approximately 75 nm diameter colloidal silica in water available from Nalco Chemical Company, Naperville IL). To this dispersion, 350 grams of 1-methoxy-2-propanol was added with stirring. Next 5.03 grams of 97% 3-(methacryloxy)propyltrimethoxysilane (Alfa Aesar, Ward Hill MA), 0.30 grams of a 5% aqueous solution of Prostab 5198 (BASF Corp., Florham Park NJ) and 50 grams of 1-methoxy-2-propanol was added to a 100 ml poly beaker. The premix of 3-(methacryloxy)propyltrimethoxysilane/Prostab 5198/1-methoxy-2-propanol premix was added to the batch with stirring. The beaker containing the premix was rinsed with aliquots of 1-methoxy-2-propanol totaling 50 grams. The rinses were added to the batch. At this point the batch was a translucent, low-viscosity dispersion. The batch was heated to 80 °C and held for approximately 16 hours. The batch was cooled to room temperature and transferred to a 2000 ml 1-neck flask. The reaction flask was rinsed with 100 grams of 1-methoxy-2-propanol and the rinse was added to the batch. An additional 250 grams of 1-methoxy-2-propanol was added to the flask to aid in the 1-methoxy-2-propanol/water azeotrope distillation. The batch was heated/distilled under vacuum on a Rotavapor to result in a translucent dispersion containing 42 wt% solids of surface-modified silica particles in 1-methoxy-2-propanol.

### Tests Methods

**Abrasion** of the samples was tested cross web to the coating direction using a mechanical device capable of oscillating an abrasive material adhered to a stylus across each sample's coated surface. The stylus oscillated over a 60 mm wide sweep width at a rate of 210 mm/sec (2 wipes/second), where a wipe is defined as a single travel of 60 mm. The stylus was a cylinder with a flat base and a diameter of 3.2 cm. The abrasive material used for this test was steel wool that was obtained from Rhodes- American (a division of Homax Products, Bellingham, WA) under the trade designation "#0000-Super-Fine" and was used as received.

Disks of diameter 3.2 cm were cut from the pads and adhered to the base of the stylus using 3M Scotch Permanent Adhesive Transfer tape. A single sample was tested for each example with a 4.5 kg weight and 3000 wipes. After abrasion, the optical haze of each sample was measured using a Haze-Gard Plus haze meter (available from BYK Gardner, Columbia MD) at five different points. The delta haze value for each sample was calculated by subtracting the haze of an untested region of the sample.

**Pencil hardness** of each sample was measured using the JIS K5600-5-4:1999 test procedure and a #8H pencil and a 750 g weight. The samples were inspected visually. A "Pass" recorded indicates that no cracking was seen. A "Fail" indicates that significant evidence of cracking was observed. A "Slight" indicates that some small about of cracking was observed.

**Curl** was measured by placing a 10 cm square portion of the hard coated film sample on a table top and measuring the height of each of the four corners from the table top. The sum of the four heights was recorded as the curl.

**Mandrel Bend** was measured by bending the samples over a series of mandrels and recording the smallest mandrel diameter that did not show cracking. The bend testing was conducted with the light transmissive film contacting the mandrel.

### Examples 1-4 and Comparative Examples C1-C2

Coating solutions were prepared according to the table below. The quantities in the table are in parts by weight solids with weight percent solids given in parentheses. The prepared coating solutions were coated at 52% solids on 5 mil (0.13 mm) primed PET film (available as ScotchPak from 3M Company, St. Paul MN.) The coating was done with a #22 wire wound rod (available from R.D. Specialties, Webster NY) and dried at 80° C for 2 minutes. The dried coating had a thickness of about 14 microns. The coatings were then cured using a Fusion H bulb (available from Fusion UV Systems, Gaithersburg MD) at 100% power under nitrogen at 40 feet/minute (12.1 m/min). All the testing was conducted on the dried and cured hard coated PET film.

| **Example** | **C1** | **1** | **2** | **3** | **4** | **C2** |
|---|---|---|---|---|---|---|
| Esacure One | 0.31 (1.32) | 0.31 (1.32) | 0.31 (1.32) | 0.4 (1.10) | 0.4 (1.08) | 0.4 (1.07) |
| A174 Treated Silica 42 wt-% solids (solids) | 4.5 (19.2) | 4.5 (19.2) | 4.5 (19.2) | 8.68 (23.8) | 18.6 (50.4) | 28.5 (76.5) |
| SR399 | 1.05 (4.48) | 1.05 (4.48) | 1.05 (4.48) | 1.88 (5.16) | 1.88 (5.10) | 1.88 (5.04) |
| SR9035 | 4 (17.1) | 4 (17.1) | 4 (17.1) | 2.5 (6.86) | 2.5 (6.78) | 2.5 (6.91) |
| SR444C | 4 (17.1) | 4 (17.1) | 4 (17.1) | 3.5 (9.60) | 3.5 (9.49) | 3.5 (9.39) |
| SR344 | 0.36 (1.54) | 0.36 (1.54) | 0.36 (1.54) | 0.31 (0.85) | 0.31 (0.84) | 0.31 (0.83) |
| HFPOUA (solids) | 0.2 (0.85) | 0.2 (0.85) | 0.2 (0.85) | 0.18 (0.49) | 0.18 (0.49) | 0.18 (0.48) |
| A174 Treated Silica (36.7 wt-% solids) | 9 (38.4) | | | | | |
| A174/Phenyltrimethoxysilane Treated Silica (solids) | | 9 (38.4) | | | | |
| A174/Isooctyltrimethoxysilane Treated Silica (solids) | | | 9 (38.4) | | | |
| Phenyltrimethoxysilane Treated Silica (solids) | | | | 19 (52.1) | 9.5 (25.8) | |
| Wt. % Copolymerizable Surface Treatment (A174) | 2.27 | 1.77 | 1.77 | 0.94 | 1.98 | 3.01 |
| Wt.% Non-copolymerizable Surface Treatment (phenyltrimethoxysilane) | | 0.403 | | 1.71 | 0.85 | 0 |
| Wt.% Non-copolymerizable Surface Treatment (isooctyltrimethoxysilane | | | 0.48 | | | |

| **Example** | **C1** | **1** | **2** | **3** | **4** | **C2** |
|---|---|---|---|---|---|---|
| Curl (mm) | 30 | 16 | 20 | 5 | 12 | 125 |
| Abrasion Test (delta haze) | 1.3% | 1.1% | 2% | 0.5% | 0.6% | 1.1% |
| Pencil Hardness (#8H pencil / 750 g weight) | Pass | Pass | Pass | Pass | Slight | Fail |
| Mandrel Bend (mm) | 12 | 10 | 10 | 20 | >22 | >22 |

## Claims

1. A hardcoat composition comprising:
at least one first (meth)acrylate monomer comprising at least three (meth)acrylate groups and C₂-C₄ alkoxy repeat units wherein the monomer has a molecular weight per (meth)acrylate group ranging from 220 to 375 g/mole;
at least one second (meth)acrylate monomer comprising at least three (meth)acrylate groups; and
at least 30 wt-% solids of inorganic oxide nanoparticles wherein the inorganic oxide nanoparticles comprise silica, a copolymerizable surface treatment, and a non-copolymerizable silane surface treatment.

2. The hardcoat composition of claim 1 wherein the non-copolymerizable silane surface treatment lacks a free-radically polymerizable group.

3. The hardcoat composition of claim 2 wherein the non-copolymerizable silane surface treatment has the general formula
X-L-SiRₘ(OR¹)₃₋ₘ
wherein X is an organic group comprising 3 to 12 carbon atoms;
L is an organic divalent linking group or a covalent bond;
R is independently C₁-C₄ alkyl;
R¹ is independently H or C₁-C₄ alkyl; and
m ranges from 0 to 2.

4. The hardcoat composition of claims 1-3 wherein the copolymerizable surface treatment is a silane surface treatment having the general formula
X¹-L¹-SiRₘ(OR¹)₃₋ₘ
wherein X¹ is a free-radically polymerizable group;
L¹ is a divalent linking group or a covalent bond; and
R is independently C₁-C₄ alkyl;
R¹ is independently H or C₁-C₄ alkyl; and
m ranges from 0 to 2.

5. The hardcoat composition of claims 1-4 wherein the non-copolymerizable and copolymerizable surface treatment has a surface tension ranging from 22 to 29 dynes/cm.

6. The hardcoat composition of claims 1-5 wherein the inorganic oxide nanoparticles have an average particle size ranging from 50 to 200 nm, as measured by transmission electron microscopy.

7. The hardcoat composition of claims 1-6 wherein the composition comprises up to 10 wt-% solids of inorganic oxide nanoparticles having an average particle size less than 50 nm, as measured by transmission electron microscopy.

8. The hardcoat composition of claim 1 wherein the second (meth)acrylate monomer comprises at least 4, 5, or 6 (meth)acrylate groups and is free of C₂-C₄ alkoxy repeat units.

9. The hardcoat composition of claims 1-8 wherein the hardcoat further comprises a fluorinated or silicone additive.

10. The hardcoat composition of claims 1-9 wherein the cured hardcoat exhibits no cracking when tested according to JISK56000 with a #8H pencil and a 750 gram weight; and a curl of less than 25 mm as determined according to the Curl Test Method wherein a 10 cm square portion of a hard coated film sample is placed on a table top, the height of each of the four comers from the table top measured and the sum of the four measured heights are recorded as the curl.

11. A protective film article comprising a light transmissive polymeric film and the cured hardcoat composition of claims 1-10 disposed on a major surface or both major surfaces of the light transmissive polymeric film.

12. A display article comprising a light-transmissive surface wherein the surface comprises the protective film of claim 11 or the cured hardcoat of claims 1-10.

13. The display article of claims 11-12 wherein the display article is an illuminated display.

14. The protective film article or display article of claims 11-13 further comprising a primer layer disposed between the light transmissive polymeric film and the cured hardcoat composition.

15. A touch screen or touch sensor substrate comprising the protective film of claim 11 or the cured hardcoat of claims 1-10.

## Patentansprüche

1. Hartbeschichtungszusammensetzung, die Folgendes umfasst:
mindestens ein erstes (Meth)acrylatmonomer, umfassend mindestens drei (Meth)acrylatgruppen und C₂-C₄-Alkoxy-Wiederholungseinheiten, wobei das Monomer ein Molekulargewicht pro (Meth)acrylatgruppe im Bereich von 220 bis 375 g/mol aufweist;
mindestens ein zweites (Meth)acrylatmonomer, umfassend mindestens drei (Meth)acrylatgruppen; und
mindestens 30 Gew.-% Feststoffe anorganischer Oxidnanoteilchen, wobei die anorganischen Oxidnanoteilchen Siliciumdioxid, eine copolymerisierbare Oberflächenbehandlung und eine nicht copolymerisierbare Silanoberflächenbehandlung umfassen.

2. Hartbeschichtungszusammensetzung nach Anspruch 1, wobei der nicht copolymerisierbaren Silanoberflächenbehandlung eine radikalisch polymerisierbare Gruppe fehlt.

3. Hartbeschichtungszusammensetzung nach Anspruch 2, wobei die nicht copolymerisierbare Silanoberflächenbehandlung die allgemeine Formel X-L-
SiRₘ,(OR¹)₃₋ₘ
aufweist,
worin X eine organische Gruppe mit 3 bis 12 Kohlenstoffatomen ist;
L eine organische zweiwertige Verknüpfungsgruppe oder eine kovalente Bindung ist;
R unabhängig C₁-C₄-Alkyl ist;
R¹ unabhängig H oder C₁-C₄-Alkyl ist; und
m im Bereich von 0 bis 2 liegt.

4. Hartbeschichtungszusammensetzung nach den Ansprüchen 1 bis 3, wobei die copolymerisierbare Oberflächenbehandlung eine Silanoberflächenbehandlung mit der allgemeinen Formel
X¹-L¹-SiRₘ(OR¹)₃₋ₘ ist,
worin X¹ eine radikalisch polymerisierbare Gruppe ist;
L¹ eine zweiwertige Verknüpfungsgruppe oder eine kovalente Bindung ist; und
R unabhängig C₁-C₄-Alkyl ist;
R¹ unabhängig H oder C₁-C₄-Alkyl ist; und
m im Bereich von 0 bis 2 liegt.

5. Hartbeschichtungszusammensetzung nach den Ansprüchen 1 bis 4, wobei die nicht copolymerisierbare und copolymerisierbare Oberflächenbehandlung eine Oberflächenspannung im Bereich von 22 bis 29 Dyn/cm aufweist.

6. Hartbeschichtungszusammensetzung nach den Ansprüchen 1 bis 5, wobei die anorganischen Oxidnanoteilchen eine durchschnittliche Teilchengröße im Bereich von 50 bis 200 nm aufweisen, gemessen mittels Transmissionselektronenmikroskopie.

7. Hartbeschichtungszusammensetzung nach den Ansprüchen 1 bis 6, wobei die Zusammensetzung bis zu 10 Gew.-% Feststoffe anorganischer Oxidnanoteilchen mit einer durchschnittlichen Teilchengröße von weniger als 50 nm, gemessen mittels Transmissionselektronenmikroskopie, umfasst.

8. Hartbeschichtungszusammensetzung nach Anspruch 1, wobei das zweite (Meth)acrylatmonomer mindestens 4, 5 oder 6 (Meth)acrylatgruppen umfasst und frei von C₂-C₄-Alkoxy-Wiederholungseinheiten ist.

9. Hartbeschichtungszusammensetzung nach den Ansprüchen 1 bis 8, wobei die Hartbeschichtung ferner ein fluoriertes oder Silikonadditiv umfasst.

10. Hartbeschichtungszusammensetzung nach den Ansprüchen 1 bis 9, wobei die gehärtete Hartbeschichtung keine Rissbildung bei Prüfung gemäß JISK56000 mit einem Bleistift Nr. 8H und einem Gewicht von 750 Gramm aufweist; und eine Kräuselung von weniger als 25 mm aufweist, wie gemäß dem Kräuselprüfverfahren bestimmt, wobei ein quadratischer 10 cm-Abschnitt einer hartbeschichteten Folienprobe auf eine Tischplatte gelegt wird, die Höhe jeder der vier Ecken von der Tischplatte gemessen und die Summe der vier gemessenen Höhen als Kräuselung aufgezeichnet wird.

11. Schutzfolienartikel, umfassend eine lichtdurchlässige Polymerfolie und die gehärtete Hartbeschichtungszusammensetzung nach den Ansprüchen 1 bis 10, die auf einer Hauptoberfläche oder beiden Hauptoberflächen der lichtdurchlässigen Polymerfolie angeordnet ist.

12. Anzeigeartikel, der eine lichtdurchlässige Oberfläche umfasst, wobei die Oberfläche die Schutzfolie nach Anspruch 11 oder die gehärtete Hartbeschichtung der Ansprüche 1 bis 10 umfasst.

13. Anzeigeartikel nach den Ansprüchen 11-12, wobei es sich bei dem Anzeigeartikel um eine beleuchtete Anzeige handelt.

14. Schutzfolienartikel oder Anzeigeartikel nach den Ansprüchen 11 bis 13, der ferner eine Primerschicht umfasst, die zwischen der lichtdurchlässigen Polymerfolie und der gehärteten Hartbeschichtungszusammensetzung angeordnet ist.

15. Berührungsbildschirm oder Berührungssensorsubstrat, umfassend die Schutzfolie nach Anspruch 11 oder die gehärtete Hartbeschichtung der Ansprüche 1 bis 10.

## Revendications

1. Composition de revêtement dur comprenant :
au moins un premier monomère (méth)acrylate comprenant au moins trois groupes (méth)acrylate et des motifs de répétition alcoxy en C₂ à C₄ dans laquelle le monomère a une masse moléculaire par groupe (méth)acrylate allant de 220 à 375 g/mole ;
au moins un deuxième monomère (méth)acrylate comprenant au moins trois groupes (méth)acrylate ; et
au moins 30 % en poids de matières solides de nanoparticules d'oxyde inorganique dans laquelle les nanoparticules d'oxyde inorganique comprennent de la silice, un traitement de surface copolymérisable et un traitement de surface silane non copolymérisable.

2. Composition de revêtement dur selon la revendication 1, dans laquelle le traitement de surface silane non copolymérisable est dépourvu d'un groupe polymérisable par radicaux libres.

3. Composition de revêtement dur selon la revendication 2, dans laquelle le traitement de surface silane non copolymérisable a la formule générale X-L-SiRₘ(OR¹)₃₋ₘ
dans laquelle X est un groupe organique comprenant 3 à 12 atomes de carbone ;
L est un groupe de liaison divalent organique ou une liaison covalente ;
R est indépendamment un alkyle en C₁ à C₄ ;
R¹ est indépendamment H ou un alkyle en C₁ à C₄ ; et
m va de 0 à 2.

4. Composition de revêtement dur selon les revendications 1 à 3, dans laquelle le traitement de surface copolymérisable est un traitement de surface silane ayant la formule générale
X¹-L¹-SiRₘ(OR¹)₃₋ₘ
dans laquelle X¹ est un groupe polymérisable par radicaux libres ;
L¹ est un groupe de liaison divalent ou une liaison covalente ; et
R est indépendamment un alkyle en C₁ à C₄ ;
R¹ est indépendamment H ou un alkyle en C₁ à C₄ ; et
m va de 0 à 2.

5. Composition de revêtement dur selon les revendications 1 à 4, dans laquelle le traitement de surface non copolymérisable et copolymérisable a une tension superficielle allant de 22 à 29 dynes/cm.

6. Composition de revêtement dur selon les revendications 1 à 5, dans laquelle les nanoparticules d'oxyde inorganique ont une taille moyenne de particules allant de 50 à 200 nm, telle que mesurée par microscopie électronique à transmission.

7. Composition de revêtement dur selon les revendications 1 à 6, dans laquelle la composition comprend jusqu'à 10 %, en poids de matières solides, de nanoparticules d'oxyde inorganique ayant une taille moyenne de particules inférieure à 50 nm, telle que mesurée par microscopie électronique à transmission.

8. Composition de revêtement dur selon la revendication 1, dans laquelle le deuxième monomère (méth)acrylate comprend au moins 4, 5 ou 6 groupes (méth)acrylate et est exempt de motifs de répétition alcoxy en C₂ à C₄.

9. Composition de revêtement dur selon les revendications 1 à 8, dans laquelle le revêtement dur comprend en outre un additif fluoré ou de silicone.

10. Composition de revêtement dur selon les revendications 1 à 9, dans laquelle le revêtement dur durci présente
une fissuration nulle lorsqu'on teste selon JISK56000 avec un crayon n° 8H et un poids de 750 grammes ; et un gondolage inférieur à 25 mm, tel que déterminé selon le procédé de test de gondolage, dans laquelle une partie de 10 cm carrés d'un échantillon de film de revêtement dur est placée sur un plan de travail, la hauteur de chacun des quatre coins à partir du plan de travail est mesurée et la somme des quatre hauteurs mesurées est enregistrée en tant que gondolage.

11. Article de film de protection comprenant un film polymère laissant passer la lumière et la composition de revêtement dur durcie selon les revendications 1 à 10 disposée sur une surface principale ou sur l'une et l'autre des surfaces principales du film polymère laissant passer la lumière.

12. Article d'affichage comprenant une surface laissant passer la lumière, dans lequel la surface comprend le film de protection selon la revendication 11 ou le revêtement dur durci selon les revendications 1 à 10.

13. Article d'affichage selon les revendications 11 ou 12, dans lequel l'article d'affichage est un affichage éclairé.

14. Article de film de protection ou article d'affichage selon les revendications 11 à 13, comprenant en outre une couche d'apprêt disposée entre le film polymère laissant passer la lumière et la composition de revêtement dur durcie.

15. Substrat d'écran tactile ou de capteur tactile comprenant le film de protection selon la revendication 11 ou le revêtement dur durci selon les revendications 1 à 10.
